(19) Europäisches Patentamt
European Patent Office
Office européen des brevets

(11) Veröffentlichungsnummer: **0 175 271 B1**

(12) **EUROPÄISCHE PATENTSCHRIFT**

(45) Veröffentlichungstag der Patentschrift: **06.03.91**

(51) Int. Cl.5: **C09B 31/02**, C09K 19/60, C08K 5/23, D06P 1/18

(21) Anmeldenummer: **85111479.3**

(22) Anmeldetag: **11.09.85**

Die Akte enthält technische Angaben, die nach dem Eingang der Anmeldung eingereicht wurden und die nicht in dieser Patentschrift enthalten sind.

# (54) Bisazofarbstoffe und ihre Verwendung in flüssigkristallinen Materialien oder zum Färben von synthetischen Polymeren oder Fasern.

(30) Priorität: **15.09.84 DE 3433927**

(43) Veröffentlichungstag der Anmeldung:
**26.03.86 Patentblatt 86/13**

(45) Bekanntmachung des Hinweises auf die Patenterteilung:
**06.03.91 Patentblatt 91/10**

(84) Benannte Vertragsstaaten:
**CH DE FR GB IT LI**

(56) Entgegenhaltungen:
**EP-A- 0 084 208**
**FR-A- 2 033 350**
**FR-A- 2 225 484**
**US-A- 4 128 498**

(73) Patentinhaber: **BASF Aktiengesellschaft**
**Carl-Bosch-Strasse 38**
**W-6700 Ludwigshafen(DE)**

(72) Erfinder: **Etzbach, Karl-Heinz, Dr.**
**Bensheimer Ring 9a**
**W-6710 Frankenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

**Beschreibung**

Die Erfindung betrifft 1,2,4-Thiadiazolringe enthaltende Disazofarbstoffe der Formel I

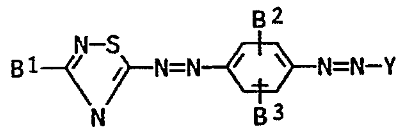

(I),

in der $B^1$ gegebenenfalls substituiertes Alkyl, Aralkyl, Cycloalkyl, Aryl, Alkylthio, Aralkylthio oder Cycloalkylthio,
$B^2$ und $B^3$ unabhängig voneinander Wasserstoff, Methoxy oder Methyl und Y einen Rest der Formel

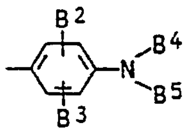

oder

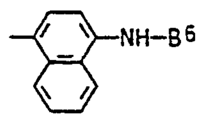

bedeuten, wobei $B^2$ und $B^3$ jeweils die oben genannte Bedeutung besitzen und $B^4$ und $B^5$ unabhängig voneinander für $C_1$- bis $C_{24}$-Alkyl, 2-Phenylethyl, gegebenenfalls substituiertes Benzyl oder Cyclohexyl oder $B^4$ und $B^5$ zusammen mit dem Stickstoff für Pyrrolidino, Piperidino oder Morpholino
und $B^6$ für $C_1$- bis $C_{24}$-Alkyl, Cyclohexyl, 2-Phenylethyl, Benzyl, 4-($C_1$- bis $C_{24}$-A1kyl)-benzyl, 4-Cyclohexylbenzyl oder 4-(4'-$C_1$- bis $C_{12}$-Alkylcyclohexyl)-benzyl stehen.

Reste $B^4$ und $B^5$ sind z.B- Methyl, Ethyl, Propyl, Butyl, Hexyl, Dodecyl, Cyclohexyl, 2-Phenylethyl, Phenylmethyl oder 4-Butylphenylmethyl.

Reste $B^1$ sind z.B. Phenyl, Phenylmethyl, Phenylethyl, Phenoxymethyl, Phenoxyethyl, Phenylmethylthio oder Phenylethylthio, wobei die genannten Reste gegebenenfalls durch $C_1$- bis $C_{24}$-Alkyl, $C_1$- bis $C_{24}$-Alkoxy, $C_1$- bis $C_{24}$-Alkoxycarbonyl, $C_1$- bis $C_{24}$-Acyloxy, $C_5$-bis $C_7$-Cycloalkyl, 4-($C_1$- bis $C_{12}$-Alkylcyclohexyl), Phenyl, Chlor oder Brom substituiert sein können, $C_5$- bis $C_7$-Cycloalkyl oder gegebenenfalls durch Hydroxy, $C_1$- bis $C_{24}$-Alkoxy, $C_1$- bis $C_{24}$-Alkoxycarbonyl, $C_1$- bis $C_{24}$-AlXyl oder DialXylcarbaoyl, $C_1$- bis $C_{24}$-Acyloxy substituiertes $C_1$-bis $C_2$-Alkyl oder $C_1$- bis $C_{24}$-Alkylthio.

Rest $B^1$ sind neben den bereits genannten z.B.: 4-($C_1$- bis $C_{12}$-AlXyl)-phenyl, 4-Cyclohexylphenyl, 4-(4'-$C_1$- bis $C_7$-Alkylcyclohexyl)-phenyl, 4-($C_1$- bis $C_{12}$-Alkyl)-phenylmethyl, 4-($C_1$- bis $C_{12}$-Alkyl)-phenylethyl, 4-($C_1$- bis $C_{12}$-AlXyl)-phenylmethylthio, 4-($C_1$- bis $C_{12}$-Alkoxy)-phenylmethylthio, 4-($C_1$- bis $C_{12}$-Alkoxycarbonyl)-phenylmethylthio, 4-($C_1$- bis $C_{12}$-Alkanoyloxy)-phenylmethylthio, 4-Cyclohexyl-phenylmethylthio, 4-(4'-$C_1$ bis $C_7$-Alkylcyciohexyl)-phenylmethylthio oder 4-($C_1$- bis $C_{12}$-Alkyl -phenylethylthio.

Bevorzugte Substituenten $B^1$ sind z.B.:
Methyl, Ethyl, propyl, Butyl, 2-Butyl, 3-Heptyl, Octyl, Nonyl, Dodecyl, Methylthio, Ethylthio, Propylthio, Butylthio, iso-Butylthio, tert.-Butylthio, Pentylthio, 2-Methylbutylthio, Hexylthio, 2-Ethylhexylthio, Octylthio, Nonylthio, iso-Nonylthio, Dodecylthio, Phenylmethylthio, 4-($C_1$-bis $C_{12}$-Alkyl)-phenylmethylthio, 4-Cyclohexylphenylmethylthio, 4-($C_1$- bis $C_7$-Alkylcyclohexyl)-phenylmethylthio, 4-($C_1$- bis $C_{12}$-Alkyl)-phenyl oder 4-(4'$C_1$- bis $C_7$-Alkylcyclohexyl)-phenyl.

Der Verbindungen der Formel I eignen sich insbesondere als pleochroitische Farbstoffe in elextrooptischen Flüssigkristallanzeigen vom Guest-Host-Typ und zur Herstellung farbiger Polarisationsfolien.

Flüssigkristalline Materialien, welche pleochroitische Farbstoffe enthalten, finden Verwendung in Displays. Die Grundlagen der erfindungsgemäßen Verwendung sind bekannt und z.B. in H. Relker u. R. Hatz, Handbook of Liquid Crystals S. 611 ff (1980), R. J. Cox, Mol. Cryst. Liq. Cryst. Vol. 55, S. 51 ff (1979), L. Pauls u. G. Schwarz, Elektronik 14, S. 66 ff (1982) beschrieben. Weitere Literatur, welche die erfindungsgemäße Verwendung detailliert beschreibt, finden sich in den genannten Veröffentlichungen.

Farbstoffe für Flüssigkristallmischungen müssen mehrere Anforderungen erfüllen. Siehe z.B. J. Constant et. al., J. Phys. D: Appl. Phys. Vol 11, S. 479 ff (1978), F. Jones u. T. J. Reeve, Mol. Cryst. Liq. Cryst. Vol 60, S. 99 ff (1980), EP 43904, EP 55838, EP 65869. Sie dürfen im elektrischen Feld nicht ionisieren, müssen einen möglichst hohen molaren Extinktionskoeffizienten $\epsilon$ und eine gute Löslichkeit in der verwendeten Flüssigkristallmatrix besitzen, müssen chemisch und insbesondere photochemisch stabil sein und zur Erzielung eines guten Kontrastes des "Guest-Host"-Displays einen Ordnungsgrad S möglichst größer 0,75 in der jeweiligen nematischen Phase aufweisen.

Violette und blaue Farbstoffe, die diesen Anforderungen gerecht werden, finden sich überwiegend in der Klasse der Anthrachinone. Siehe z.B. EP-A-56492, EP-A- 91225, DE-A- 3028593, EP-A- 54217 oder DE-A- 2902177.

Bisher bekannte Azofarbstoffe, insbesondere violette und blaue, haben in der Regel den Nachteil, daß der Ordnungsgrad, die Löslichkeit und die Lichtstabilität ungenügend sind (siehe z.B. G.W. Gray, Chimia. 34, S. 47 ff (1980)).

Aus der US-A-4 128 497 sind dichroitische Flüssigkristallkompositionen bekannt, die Trisazofarbstoffe enthalten. Dabei ist auch ein Farbstoff aufgeführt, der als heterocyclischen Rest ein Derivat von Dihydropyrimidin aufweist.

Die EP-A-84 208 beschreibt asymmetrische dichroitische Polyazofarbstoffe. Es hat sich jedoch gezeigt, daß ein solcher Disazofarbstoff, der einen Benzthiazolrest enthält, Nachteile in der Löslichkeit und in der Lichtechtheit aufweist.

Überraschenderweise haben die erfindungsgemäßen violetten und blauen Farbstoffe bei sehr gutem Ordnungsgrad auch hohe Löslichkeiten und oft ausreichende Lichtstabilitäten in der jeweiligen Flüssigkristallmatrix (z.B. ZLI 1840, ZLI 1957/5, ZLI 2452, ZLI 2585 der Fa. Merck).

Die Verwendung dichroitischer Farbstoffe zur Herstellung von Polarisationsfolien wird z.B. von R. Mizoguchi, et. al. in Displays, Vol. 4, S. 201 ff (1983) beschrieben, dort findet sich auch noch weitere Literatur.

Zur Herstellung der Verbindungen der Formel I kann man Verbindungen der Formel II

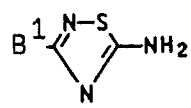

z.B. mit Nitrosylschwefelsäure in Eisessig diazotieren und dann mit Kupplungskomponenten der Formel

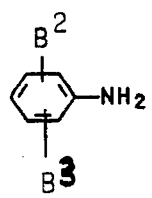

oder

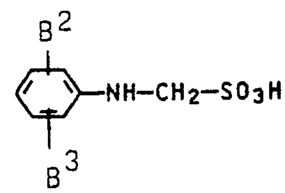

zu Verbindungen der Formel

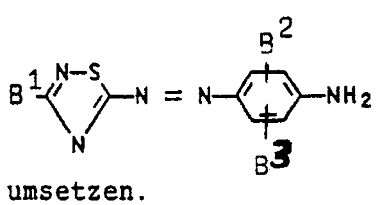

oder

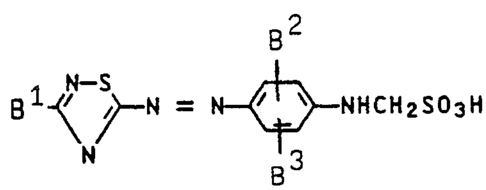

umsetzen.

Durch Diazotierung der Monoazo-Verbindungen und anschließende Kupplung mit Verbindungen der Formel HY erhält man die Verbindungen der Formel I.

Die Herstellung der Verbindungen der Formel II erfolgt nach bekannten Methoden (siehe z.B. J. Goerdeler, Chem. Ber. 87 , 57 (1954), J. Goerdeler, A. Huppertz u. K. Wember, Chem. Ber. 87 , 69 (1954), J. Goerdeler u. F. Bechlars, Chem. Ber. 88 , 843 (1955), J. Goerdeler u. M. Willig, Chem. Ber. 88 , 1071 (1955), J. Goerdeler, J. Ohm u. O. Tegtmeyer, Chem. Ber. 89 , 1535 (1956), J. Goerdeler u. P. Linden, Chem. Ber. 89 , 2742 (1956).

Die Reinigung der Farbstoffe kann durch Chromatographie über Kieselgel mit z.B. Toluol/Essigester-Gemischen als Laufmittel durchgeführt werden. Anschließend werden die Farbstoffe z.B. aus Toluol umkristallisiert. Die Reinheitskontrolle erfolgt durch Dünnschichtchromatographie, HPLC und Elementaranalyse.

Eine repräsentative Herstellungsmethode für die Farbstoffe der Formel I ist in dem folgenden Beispiel 1 beschrieben. Die Angaben über Teile und Prozente beziehen sich, sofern nicht anders vermerkt, auf das

Gewicht.

Allgemeine Herstellungsmethode

Beispiel 1

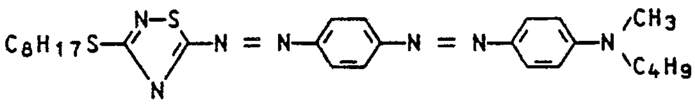

Zu einem Gemisch aus 7,4 Teilen 3-Octyl-5-amino-1,2,4-thiadiazol (Herst. wie von J. Goerdeler in Chem. Ber. 89 , 2742 (1956) beschrieben), 70 Teilen Eisessig und 30 Teilen Propionsäure gibt man bei 5 °C 10,8 Teile Nitrosylschwefelsäure (36 %ig) und rührt die Mischung noch 3 h bei 5 °C.

Anschließend wird die Diazoniumsalzlösung unter Eiskühlung zu einer Lösung von 6,3 Teilen Natrium-anilinomethansulfonat, 1 Teil Amidosulfonsäure und 100 Teilen Wasser gegeben. Man läßt die Mischung auf Raumtemp. kommen, rührt dann noch 3 h und saugt den entstandenen Niederschlag ab. Das feuchte Nutschgut wird in 100 Teilen Ethanol und 30 Teilen konz. Salzsäure aufgenommen und die Mischung 0,5 h zum Sieden erhitzt. Nach dem Abkühlen wird der als Hydrochlorid anfallende Monoazofarbstoff der Formel

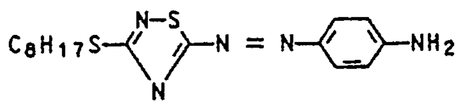

abgesaugt, mit Wasser, dann mit einer konz. wässrigen Natriumacetatlösung und dann nochmals mit Wasser gewaschen. Das gut trockengesaugte Nutschgut wird in 70 Teilen Eisessig und 30 Teilen Propionsäure aufgenommen, dann werden zu dieser Lösung bei 5 °C zunächst 9 Teile einer 23 %igen wässrigen Natriumnitritlösung und danach 10 Teile konz. Salzsäure gegeben und die Mischung 4 h bei 5 °C gerührt. Anschließend gibt man die Diazoniumsalzlösung in ein Gemisch aus 4,8 Teilen N-Butyl-N-methyl-anilin, 50 Teilen iso-Butanol, 100 Teilen einer gesättigten wässrigen Natriumacetatlösung und 200 Teilen Eiswasser. Nach dem Erwärmen auf Raumtemperatur saugt man den entstandenen Farbstoff ab, wäscht ihn mit Methanol und dann mit Wasser und trocknet ihn. Man erhält 8 Teile (51 % d.Th.) Rohfarbstoff des Beispiels 1, der durch Ghromatographie über Kieselgel (Fa. Merck, Kieselgel 60, 0,063 - 0,0200 mm) mit einem Teil Toluol/Essigester-Gemisch (40/1) als Eluationsmittel und anschließende Umkristallisation aus Toluol/Gyclohexan gereinigt wird.

Schmp.: 122 °C, ℓ max ($CH_2Cl_2$) : 565 nm

| Bsp. | | Schm. | λ max ($CH_2Cl_2$) |
|---|---|---|---|
| 2 | 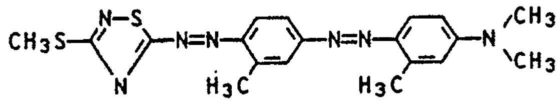 | 232 °C | 575 nm |
| 3 | 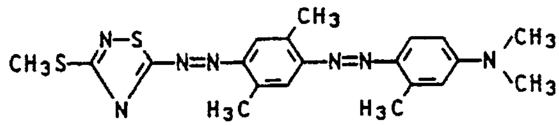 | 226 °C | 578 nm |
| 4 | 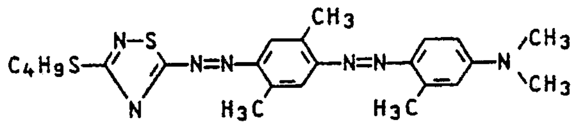 | 182 °C | 577 nm |
| 5 | 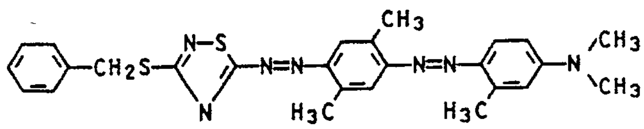 | 224 °C | 580 nm |
| 6 | 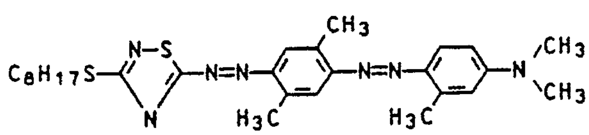 | 146 °C | 578 nm |
| 7 | 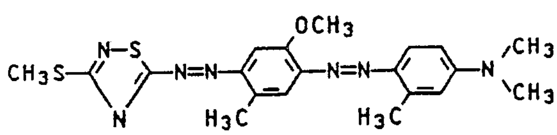 | 218 °C | 600 nm |
| 8 | 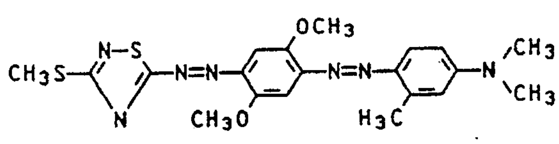 | 240 °C | 623 nm |

| Bsp. | | Schmp. | $\lambda$ max ($CH_2Cl_2$) |
|---|---|---|---|
| 9 | 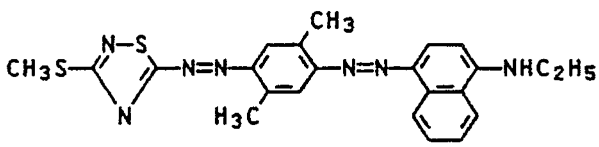 | 227 °C | 597 nm |
| 10 | 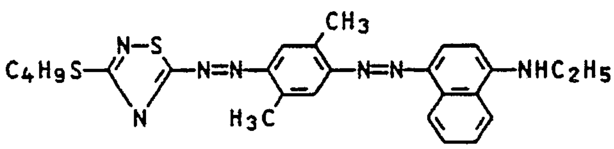 | 185 °C | 600 nm |
| 11 | 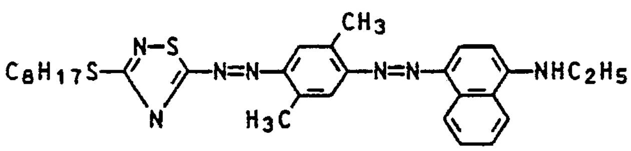 | 155 °C | 600 nm |
| 12 | 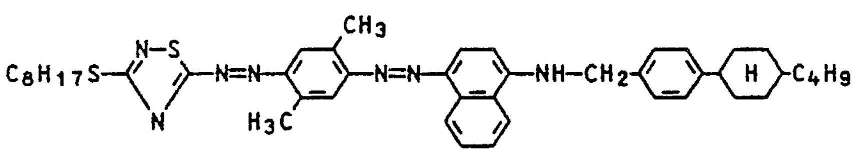 | 165 °C | 592 nm |
| 13 | 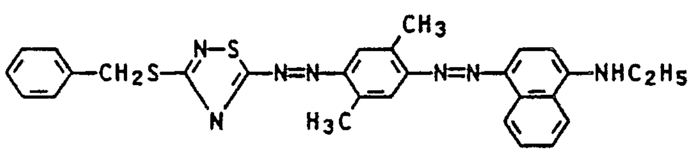 | 237 °C | 602 nm |
| 14 | 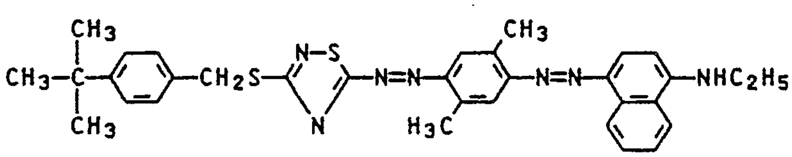 | 235 °C | 605 nm |
| 15 | 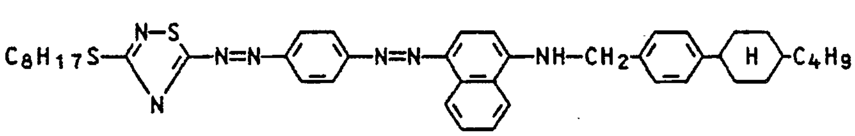 | 176 °C | 588 nm |

| Bsp. | | Schmp. | $\lambda$ max ($CH_2Cl_2$) |
|---|---|---|---|
| 16 | 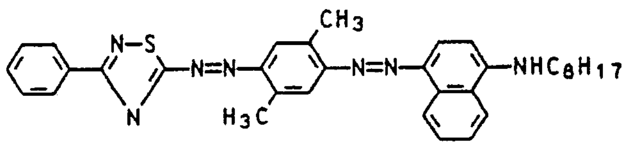 | 179 °C | 604 nm |
| 17 | 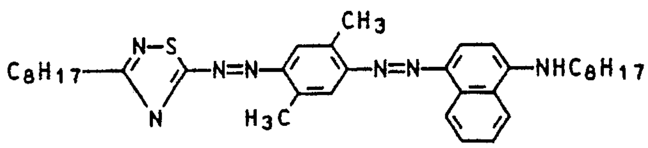 | 132 °C | 593 nm |
| 18 | 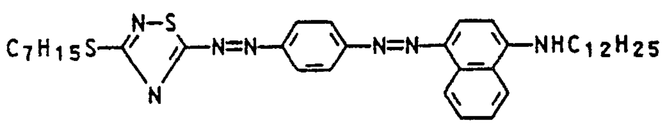 | 115 °C | 588 nm |
| 19 | 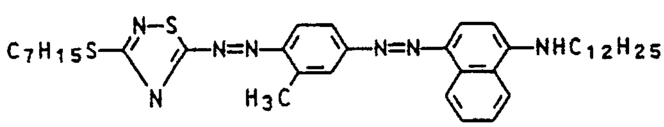 | 121 °C | 600 nm |

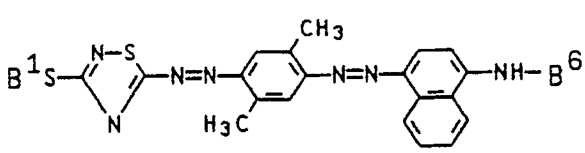

| Bsp. | $B^1$ | $B^2$ | Schmp. °C | λ max ($CH_2Cl_2$) |
|---|---|---|---|---|
| 20 | $CH_3$ | $C_8H_{17}$ | 181 | 603 nm |
| 21 | $CH_3$ | $C_{12}H_{25}$ | 142 | 606 nm |
| 22 | $C_2H_5$ | $C_8H_{17}$ | 140 | 605 nm |
| 23 | $C_2H_5$ | $C_{12}H_{25}$ | 142 | 604 nm |
| 24 | $C_3H_7$ | $C_8H_{17}$ | 143 | 603 nm |
| 25 | $C_3H_7$ | $C_{12}H_{25}$ | 139 | 603 nm |
| 26 | $C_4H_9$ | $C_8H_{17}$ | 158 | 603 nm |
| 27 | $C_4H_9$ | $C_{12}H_{25}$ | 145 | 603 nm |
| 28 | $C_5H_{11}$ | $C_8H_{17}$ | 138 | 603 nm |
| 29 | $C_5H_{11}$ | $C_{12}H_{25}$ | 132 | 603 nm |
| 30 | $C_7H_{15}$ | $C_{12}H_{25}$ | 113 | 605 nm |
| 31 | $C_8H_{17}$ | $C_8H_{17}$ | 120 | 602 nm |
| 32 | $C_8H_{17}$ | $C_{12}H_{25}$ | 113 | 605 nm |
| 33 | 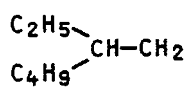 | $C_2H_5$ | 160 | 600 nm |
| 34 | $C_{12}H_{25}$ | $C_8H_{17}$ | 137 | 603 nm |
| 35 | $C_{12}H_{25}$ | $C_{12}H_{25}$ | 112 | 603 nm |
| 36 | $C_8H_{17}$ | 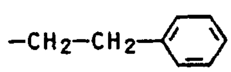 | 131 | 598 nm |
| 37 | $C_8H_{17}$ | 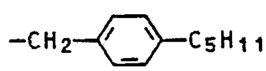 | 159 | 594 nm |

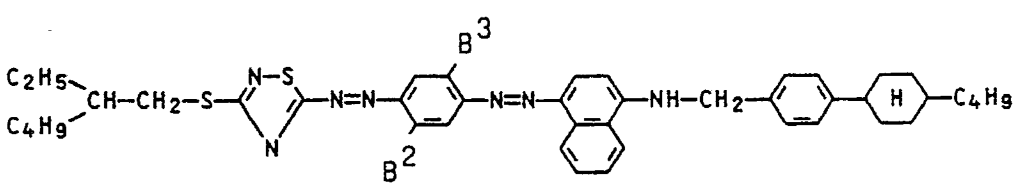

| Bsp. | $B^2$ | $B^3$ | Schmp. °C | λ max ($CH_2Cl_2$) |
|---|---|---|---|---|
| 38 | H | H | 164 | 588 nm |
| 39 | $CH_3$ | H | 180 | 593 nm |
| 40 | $CH_3$ | $CH_3$ | 177 | 593 nm |

Tabelle 1

| Beispiel | Ordnungsgrad S (bei RT) | Löslichkeit L (bei RT) | Flüssigkristallmischung |
|---|---|---|---|
| 1 | 0,72 | 1,5 % | ZLI 1957/5 |
| 4 | 0,73 | 0,9 % | ZLI 1840 |
| 5 | 0,74 | 0,3 % | ZLI 1840 |
| 6 | 0,73<br>0,76 | 1,5 %<br>— | ZLI 1957/5<br>ZLI 2452 |
| 9 | 0,72 | 0,7 % | ZLI 1840 |
| 12 | 0,77<br>0,81<br>0,74 | 1,4 %<br>2,8 %<br>2,8 % | ZLI 1957/5<br>ZLI 2452<br>ZLI 2585 |
| 15 | 0,79 | 0,9 % | ZLI 1957/5 |

In Tabelle 1 sind für die Beispiele 1,4,6,9,12 und 15 der bei Raumtemperatur gemessene Ordnungsgrad S, die ebenfalls bei Raumtemperatur bestimmte Löslichkeit L und die verwendeten Flüssigkristallmischungen der Fa. Merck zusammengefaßt.

In Tabelle 2 sind für einige der Beispiele 21 - 40 die bei Raumtemperatur in ZLI 2452 gemessenen Werte für den Ordnungsgrad und die Löslichkeit zusammengefaßt.

Tabelle 2

| Bsp. | Ordnungsgrad S (bei RT) | Löslichkeit L (bei RT) |
|---|---|---|
| 21 | 0,76 | 1,3 % |
| 30 | 0,79 | 0,6 % |
| 31 | 0,77 | 0,8 % |
| 33 | 0,74 | > 5 % |
| 35 | 0,77 | 1,2 % |
| 36 | 0,74 | 0,6 % |
| 37 | 0,80 | 0,4 % |
| 38 | 0,81 | 2,6 % |
| 39 | 0,81 | 2,4 % |
| 40 | 0,80 | 0,8 % |

Der Ordnungsgrad S wurde nach der bekannten Gleichung

$$S = \frac{CR-1}{CR+2}$$

in handelsüblichen Meßzellen mit homogener Randorientierung (Polyimid) bestimmt. Das dichroitische Verhältnis CR wurde durch Messung der Extinktionen E" (Messung mit parallel zur Vorzugsrichtung der nematischen Phase polarisiertem Licht) und $E^{\perp}$(Messung mit senkrecht zur Vorzugsrichtung der nematischen Phase polarisiertem Licht) nach der Beziehung

$$CR = \frac{E''}{E^{\perp}}$$

ermittelt, wobei die Farbstoffkonzentration so gewählt wurde, daß E" zwischen 1 und 2 lag. Die Messungen wurden an einem Spektralphotometer der Fa. Beckmann Acta CIII durchgeführt.

In Fiaur 1 sind die Extinktionen E" und $E^{\perp}$ für die Verbindung des Beispiels 15 in ZL1 1957/5 dargestellt.

Die Löslichkeit wurde wie folgt bestimmt.

50 mg des jeweiligen Farbstoffs wurde 1 Woche bei Raumtemperatur in 1 ml Flüssigkristall eingerührt, die gesättigte Lösung vom Rückstand abzentrifugiert und die Löslichkeit durch Extinktionsvergleich ermittelt.

Die Bestimmung der Lichtstabilität der Farbstoffe im jeweiligen Flüssigkristall erfolgte durch Schnellbelichtung der Lösung in der Meßzelle im Suntest (Fa. Hanau) bei 25 °C. Die Farbstoffe zeigten, insbesondere bei Verwendung eines UV-Schutzlackes, eine gute Photostabilität.

**Ansprüche**

**1.** 1,2,4-Thiadiazolringe enthaltende Disazofarbstoffe der Formel I

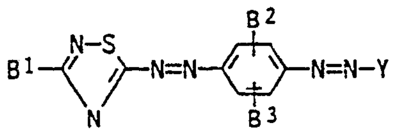

(I),

in der
$B^1$ gegebenenfalls substituiertes Alkyl, Aralkyl, Cycloalkyl, Aryl, Alkylthio, Aralkylthio oder Cycloalkylthio, $B^2$ und $B^3$ unabhängig voneinander Wasserstoff, Methoxy oder Methyl und Y einen Rest der Formel

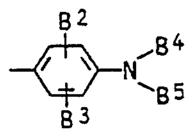

oder

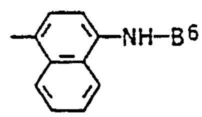

bedeuten, wobei $B^2$ und $B^3$ jeweils die oben genannte Bedeutung besitzen und $B^4$ und $B^5$ unabhängig voneinander für $C_1$- bis $c_{24}$-Alkyl, 2-Phenylethyl, gegebenenfalls substituiertes Benzyl oder Cyclohexyl oder $B^4$ und $B^5$ zusammen mit dem Stickstoff für Pyrrolidino, Piperidino oder Morpholino
und $B^6$ für $C_1$- bis $C_{24}$-Alkyl, Cyclohexyl, 2-Phenylethyl, Benzyl, 4-($c_1$- bis $C_{24}$-Alkyl)-benzyl, 4-Cyclohexyl-benzyl oder 4-(4'-$C_1$- bis $C_{12}$-Alkylcyclohexyl)-benzyl stehen.

**2.** Verwendung der Verbindungen gemäß Anspruch 1 der Formel I in flüssigkristallinen Medien sowie zum Färben von synthetischen Polymeren oder Fasern.

## Claims

**1.** A disazo dye which contains a 1,2,4-thiadiazole ring and is of the formula I

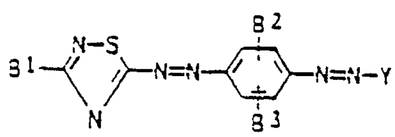

(I)

where $B^1$ is unsubstituted or substituted alkyl, aralkyl, cycloalkyl, aryl, alkylthio, aralkylthio or cycloalkylthio, $B^2$ and $B^3$ independently of one another are each hydrogen, methoxy or methyl, and Y is a radical of the formula

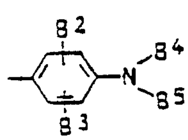

or

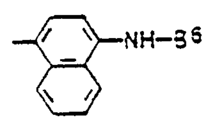

where $B^2$ and $B^3$ each have the abovementioned meanings and $B^4$ and $B^5$ independently of one another are each $C_1$-$C_{24}$-alkyl, 2-phenylethyl, unsubstituted or substituted benzyl or cyclohexyl, or $B^4$ and $B^5$ together with the nitrogen atom form pyrrolidino, piperidino or morpholino, and $B^6$ is $C_1$-$C_{24}$-allcyl, cyclohexyl, 2-phenylethyl, benzyl, 4-($C_1$-$C_{24}$-allcyl)-benzyl, 4-cyclohexylbenzyl or 4- 4'-$C_1$-$C_{12}$-allcyl-cyclohexyl)-benzyl.

2. Use of a compound as claimed in claim 1 of the formula I in liquid-crystalline materials and for dyeing synthetic polymers or fibers.

## Revendications

1. colorants disazoïgues de formule I, contenant des noyaux 1,2,4-thiadiazole

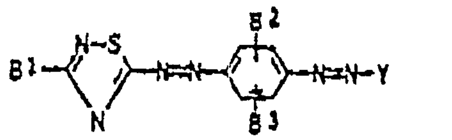

(I),

dans laquelle
$B^1$ représente alkyle, aralkyle, cycloalkyle, aryle, alkylthio, aralkylthio ou cycloalkylthio, éventuellement substitué
$B^2$ et $B^3$, indépendamment l'un de l'autre, hydrogène, méthoxy ou méthyle et
Y, un reste de formule

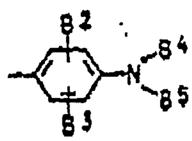

oder

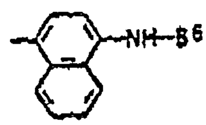

$B^2$ et $B^3$ ayant chacun la signification indiquée plus haut et $B^4$ et $B^5$ étant mis , indépendamment l'un de l'autre, pour alkyle en $C_1$-$C_{24}$ 2-phényléthyle, benzyle ou cyclohexyle, eventuellement substitué, ou $B^4$ et $B^5$ étant mis, ensemble avec l'azote, pour pyrrolidino, pipéridino ou morpholino
et $B^6$ étant mis pour alkyle en $C_1$ à $C_{24}$, cyclohéxyle, 2-phényléthyle, benzyle, 4-(alkyle en $C_1$ à $C_{24}$)-benzyle, 4-cyclohéxyl-benzyle ou 4-(4'-alkyle en $C_1$ à $C_{12}$ cyclohéxyl)-benzyle.

2. Utilisation des composés selon la revendication 1 de formule I en milieux de cristaux liquides, ainsi que pour la teinture de polymère synthétiques ou de fibres.

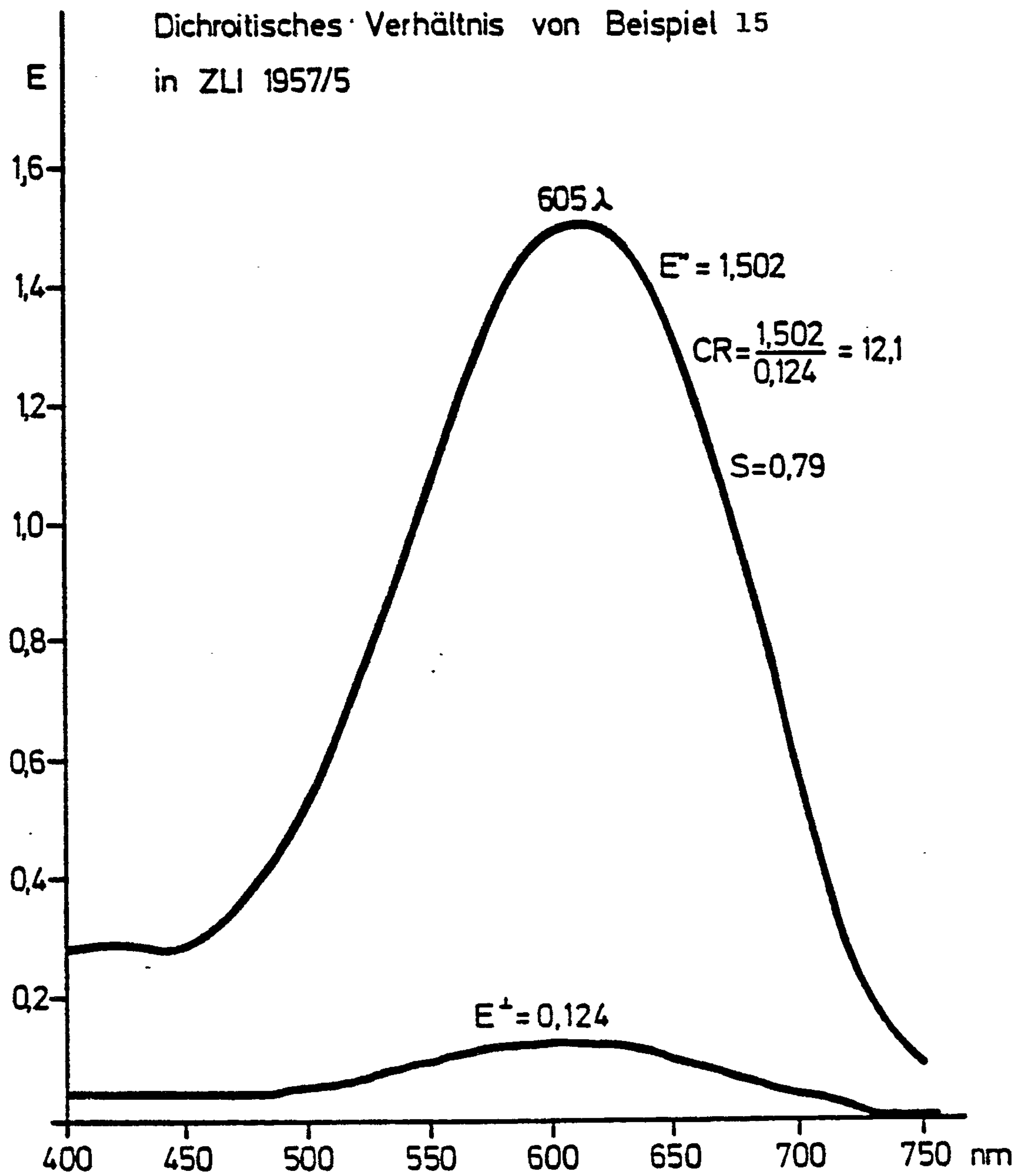
Dichroitisches Verhältnis von Beispiel 15
in ZLI 1957/5
E
1,6
1,4
1,2
1,0
0,8
0,6
0,4
0,2
605 λ
E'' = 1,502
CR = 1,502/0,124 = 12,1
S=0,79
E⊥ = 0,124
400
450
500
550
600
650
700
750 nm